# EUROPÄISCHE PATENTSCHRIFT

(11) **EP 2 399 328 B1**
(45) Veröffentlichungstag und Bekanntmachung des Hinweises auf die Patenterteilung: **06.03.2019**
(21) Anmeldenummer: 10706471.9
(22) Anmeldetag: 18.01.2010
(51) Int. Cl.: H02H 3/44, H02H 1/00

(54) **SCHUTZSCHALTER MIT DETEKTION DER APERIODISCHEN STROMÄNDERUNGEN**
CIRCUIT BREAKER HAVING DETECTION OF THE APERIODIC CURRENT CHANGE
DISJONCTEUR DE PROTECTION AVEC DÉTECTION DE VARIATION APÉRIODIQUE DE COURANT

(30) Priorität: 23.02.2009 AT 2962009
(43) Veröffentlichungstag der Anmeldung: 28.12.2011
(73) Patentinhaber: Eaton Intelligent Power Limited, Dublin 4 (IE)
(72) Erfinder: KOCH, Michael, A-1190 Wien (AT)
(74) Vertreter: Eaton IP Group EMEA
(86) Internationale Anmeldenummer: PCT/AT2010/000012
(87) Internationale Veröffentlichungsnummer: WO 2010/094049

(56) Entgegenhaltungen:
- US-A- 5 839 092
- US-A1- 2004 066 593
- US-B2- 7 400 481

## Beschreibung

Die Erfindung betrifft einen Schutzschalter gemäß dem Oberbegriff des Patentanspruches 1.

Es sind Schutzschalter bekannt, welche beim Auftreten eines erhöhten Stromflusses in einem elektrischen Netz bzw. einer elektrischen Leitung ein Netz, Teilnetz oder eine elektrische Leitung durch das automatische Öffnen von Trennkontakten abschalten. Es sind weiters Schutzschalter bekannt, welche bei Auftreten eines Fehlerstromes ein Netz, Teilnetz oder eine elektrische Leitung durch das automatische Öffnen von Trennkontakten abschalten.

Aus der US 2004/066593 ist eine Vorrichtung zur Detektion eines Lichtbogens bekannt, welche bevorzugt in einem Fehlerstromschutzschalter implementiert ist.

Aus der US 7 400 481 B2 ist ein Lichtbogendetektor bekannt.

Aus der US 5 839 092 A ist eine Lichtbogendetektor bekannt, bei welchem die Schwingungsform auf einer elektrischen Leitung analysiert wird.

Nachteilig an derartigen bekannten Schutzschaltern ist, dass neben den beschriebenen Fehlerquellen, noch weitere Fehlerquellen in elektrischen Netzen bzw. Leitungen auftreten können, welche eine potenzielle Gefahr für Einrichtungen und Lebewesen, insbesondere durch das Verursachen von Bränden, darstellen können, und welche nicht von den vorstehend beschriebenen gebräuchlichen Schutzschaltern sicher detektiert werden, da es weder zu überhöhten Stromflüssen noch zu Fehlerströmen kommen muss.

Aufgabe der Erfindung ist es daher einen Schutzschalter der eingangs genannten Art anzugeben, mit welchem die genannten Nachteile vermieden werden können, und mit welchem die Gefahr von Bränden durch Fehler in elektrischen Netzen verringert werden kann.

Erfindungsgemäß wird dies durch die Merkmale des Patentanspruches 5 erreicht.

Dadurch kann die Gefahr von Bränden durch Fehler in elektrischen Netzen verringert werden. Dadurch können sog. serielle und/oder parallele Fehler, welche zu Lichtbögen führen können, in einem elektrischen Netz erkannt, und das betreffende Netz abgeschaltet werden. Dadurch können Brände, welche durch Lichtbögen entstehen könnten, sicher verhindert werden. Dadurch können Lebewesen und Anlagen vor den Gefahren des elektrischen Stromes bzw. des durch diesen induzierten Feuers weiter geschützt werden.

Die Erfindung betrifft weiters einen Detektor gemäß dem Oberbegriff des Patentanspruches 1.

Die eingangs beschriebenen bekannten Schutzschalter sind nicht in der Lage Fehler zu erkennen, welche keinen erhöhten Stromfluss in einer Leitung oder keinen Fehlerstrom zur Folge haben, welche Fehler aber trotzdem zu einem Brand innerhalb bzw. im Bereich eines elektrischen Netzes führen können.

Aufgabe der Erfindung ist es daher einen Detektor der vorstehend genannten Art anzugeben, mit welchem die genannten Nachteile vermieden werden können, und mit welchem die Gefahr von Bränden durch Fehler in elektrischen Netzen verringert werden kann.

Erfindungsgemäß wird dies durch die Merkmale des Patentanspruches 1 erreicht.

Dadurch kann die Gefahr von Bränden durch Fehler in elektrischen Netzen verringert werden. Dadurch können sog. serielle und/oder parallele Fehler, welche zu Lichtbögen führen können, in einem elektrischen Netz erkannt, und das betreffende Netz abgeschaltet werden. Dadurch können Brände, welche durch Lichtbögen entstehen könnten, sicher verhindert werden. Dadurch können Lebewesen und Anlagen vor den Gefahren des elektrischen Stromes bzw. des durch diesen induzierten Feuers weiter geschützt werden.

Die Unteransprüche, welche ebenso wie die Patentansprüche 1 und 5 gleichzeitig einen Teil der Beschreibung bilden, betreffen bevorzugte Ausführungen des Detektors für den erfindungsgemäßen Schutzschalter.

Die Erfindung betrifft weiters ein Verfahren zur Detektion aperiodischer, im Wesentlichen sprunghafter Änderungen der Amplitude wenigstens eines elektrischen Parameters innerhalb eines elektrischen Netzes gemäß dem Oberbegriff des Patentanspruches 6.

Die eingangs beschriebenen bekannten Schutzschalter sind nicht in der Lage Fehler zu erkennen, welche keinen erhöhten Stromfluss in einer Leitung oder keinen Fehlerstrom zur Folge haben, welche Fehler aber trotzdem zu einem Brand innerhalb bzw. im Bereich eines elektrischen Netzes führen können.

Aufgabe der Erfindung ist es daher einem Verfahren der vorstehend genannten Art anzugeben, mit welchem die genannten Nachteile vermieden werden können, und mit welchem die Gefahr von Bränden durch Fehler in elektrischen Netzen verringert werden kann.

Erfmdungsgemäß wird dies durch die Merkmale des Patentanspruches 6 erreicht.

Dadurch kann die Gefahr von Bränden durch Fehler in elektrischen Netzen verringert werden. Dadurch können sog. serielle und/oder parallele Fehler, welche zu Lichtbögen führen können, in einem elektrischen Netz erkannt, und das betreffende Netz abgeschaltet werden. Dadurch können Brände, welche durch Lichtbögen entstehen könnten, sicher verhindert werden. Dadurch können Lebewesen und Anlagen vor den Gefahren des elektrischen Stromes bzw. des durch diesen induzierten Feuers weiter geschützt werden.

Die Unteransprüche, welche ebenso wie der Patentanspruch 6 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 zwei schematische Stromlaufpläne zur Veranschaulichung eines seriellen und eines parallelen Fehlers in einem elektrischen Netz;
Fig. 2 einen schematischen Stromlaufplan zur Veranschaulichung eines kombinierten seriellen und parallelen Fehlers in einem 3-fach Verteiler;
Fig. 3 ein erstes Beispiel eines ersten Parametersignals (Stromsignals) mit periodischen sprunghaften Änderungen der Amplitude eines elektrischen Parameters zufolge eines seriellen Fehlers im Zeitbereich;
Fig. 4 das Parametersignal nach Fig. 3 nach dem ersten Schritt des erfindungsgemäßen Verfahrens im Zeitbereich;
Fig. 5 das Parametersignal nach Fig. 4 nach dem zweiten Schritt des erfindungsgemäßen Verfahrens im Zeitbereich;
Fig. 6 das Signal gemäß Fig. 5 im Frequenzbereich;
Fig. 7 ein zweites Beispiel eines ersten Parametersignals (Stromsignals) mit aperiodischen sprunghaften Änderungen der Amplitude eines elektrischen Parameters zufolge eines seriellen Fehlers im Zeitbereich;
Fig. 8 das Parametersignal nach Fig. 7 nach dem ersten Schritt des erfindungsgemäßen Verfahrens im Zeitbereich;
Fig. 9 das Parametersignal nach Fig. 8 nach dem zweiten Schritt des erfindungsgemäßen Verfahrens im Zeitbereich;
Fig. 10 das Signal gemäß Fig. 9 im Frequenzbereich;
Fig. 11 ein drittes Beispiel eines ersten Parametersignals (Stromsignals) mit aperiodischen sprunghaften Änderungen der Amplitude eines elektrischen Parameters zufolge eines parallelen Fehlers im Zeitbereich;
Fig. 12 das Parametersignal nach Fig. 11 nach der besonders bevorzugten Ausgestaltung des ersten Schritts des erfindungsgemäßen Verfahrens im Zeitbereich;
Fig. 13 das Parametersignal nach Fig. 12 nach dem zweiten Schritt des erfindungsgemäßen Verfahrens im Zeitbereich;
Fig. 14 ein viertes Beispiel eines ersten Parametersignals (Stromsignals) mit periodischen sprunghaften Änderungen der Amplitude eines elektrischen Parameters zufolge eines parallelen Fehlers im Zeitbereich;
Fig. 15 das Parametersignal nach Fig. 14 nach der besonders bevorzugten Ausgestaltung des ersten Schritts des erfindungsgemäßen Verfahrens im Zeitbereich;
Fig. 16 das Parametersignal nach Fig. 15 nach dem zweiten Schritt des erfindungsgemäßen Verfahrens im Zeitbereich;
Fig. 17 ein Blockschaltbild einer bevorzugten Ausgestaltung eines Schutzschalters mit einer ersten bevorzugten Ausbildung eines erfindungsgemäßen Detektors;
Fig. 18 ein Blockschaltbild einer zweite bevorzugte Ausbildung eines erfindungsgemäßen Detektors;
Fig. 19 ein Blockschaltbild einer dritte bevorzugte Ausbildung eines erfindungsgemäßen Detektors; und
Fig. 20 ein Blockschaltbild einer vierte bevorzugte Ausbildung eines erfindungsgemäßen Detektors.

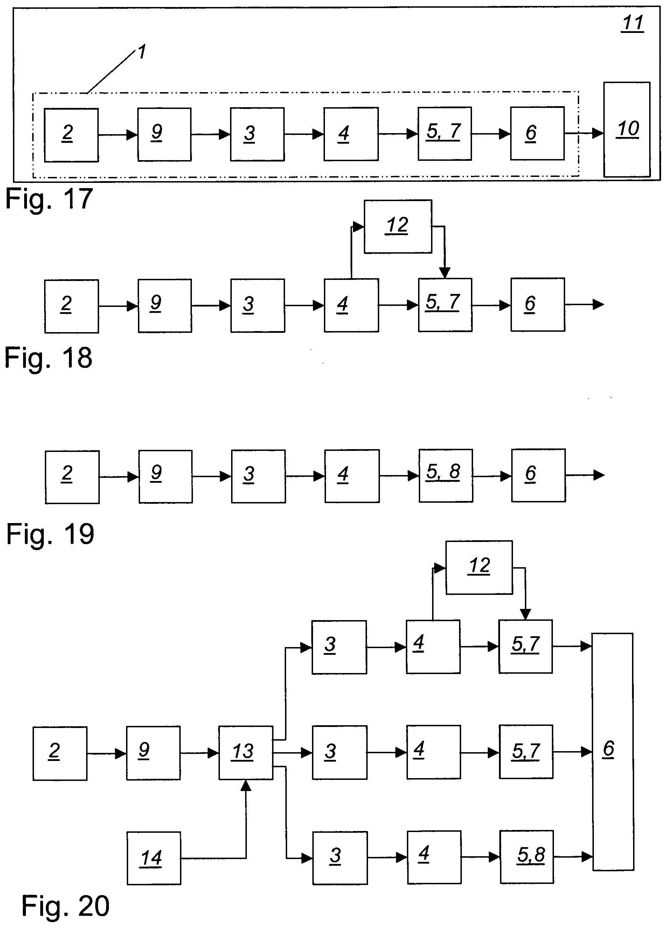

Fig. 17 zeigt ein Blockschaltbild eines Schutzschalter 11, welcher Trennkontakte zum vorgebbaren Abschalten eines elektrischen Netzes aufweist, wobei die Trennkontakte von wenigstens einer Auslöseeinheit 10 ansteuerbar sind, wobei der Schutzschalter einen Detektor 1 zur Detektion aperiodischer, im Wesentlichen sprunghafter Änderungen der Amplitude wenigstens eines elektrischen Parameters innerhalb des elektrischen Netzes aufweist, und dass die Auslöseeinheit 10 mit dem Detektor 1 wirkverbunden ist.

Dadurch kann die Gefahr von Bränden durch Fehler in elektrischen Netzen verringert werden. Dadurch können sog. serielle und/oder parallele Fehler 18, 19, welche zu Lichtbögen führen können, in einem elektrischen Netz erkannt, und das betreffende Netz abgeschaltet werden. Dadurch können Brände, welche durch Lichtbögen entstehen könnten, sicher verhindert werden. Dadurch können Lebewesen und Anlagen vor den Gefahren des elektrischen Stromes bzw. des durch diesen induzierten Feuers weiter geschützt werden.

Erfindungsgemäße Schutzschalter 11 sind zum Schutz vor den Wirkungen jeder Art von Fehler vorgesehen, welche bei deren Auftreten aperiodische, im Wesentlichen sprunghafte Änderungen der Amplitude wenigstens eines elektrischen Parameters innerhalb des elektrischen Netzes verursachen. Bevorzugt ist dabei vorgesehen, dass es sich bei dem wenigstens einen elektrischen Parameter um eine elektrische Spannung oder einen elektrischen Strom handelt. Es kann jedoch auch vorgesehen sein, dass es sich hiebei um eine elektrische Leistung handelt. Ein elektrisches Netz ist dabei bevorzugt jeder Art eines elektrischen Schaltkreises zur Verteilung elektrischer Energie, insbesondere im Bereich der häuslichen bzw. kommunalen Energieverteilung.

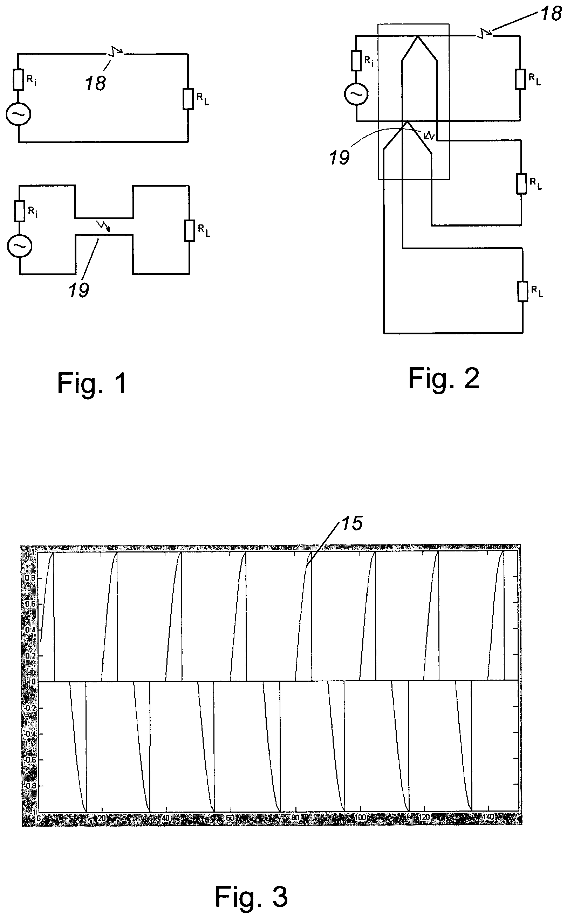

Es sind zwei häufig auftretende Fehler bekannt, welche derartige aperiodische, im Wesentlichen sprunghafte Änderungen der Amplitude des elektrischen Stromes oder der elektrischen Spannung verursachen, welche zwei Fehler allgemein als serielle Fehler 18 bzw. parallele Fehler 19 bekannt sind, und welche schematisch in den Fig. 1 und 2 veranschaulicht sind. Ein serieller Fehler 18 kann etwa aufgrund eines Kontaktproblems entstehen, etwa durch eine kalte Lötstelle oder durch Materialermüdung. Dabei kommt es in aperiodischen Abständen zu einer Unterbrechung der elektrischen Leitung. Dadurch wird der Stromfluss unterbrochen, und es kommt bei jeder Unterbrechung sowie bei jeder Wiederaufnahme des Stromflusses zu einem Lichtbogen, welcher eine potenzielle Brandquelle darstellt. Bei einem parallelen Fehler 19 kommt es - etwa aufgrund der Ermüdung der Isolation zwischen zwei Leitern - zu einem Stromfluss zwischen zwei parallelen Leitern, wobei je nach Übergangswiderstand höhere oder niedrigere Ströme zusätzlich zu den bereits fließenden Strömen auftreten können. Fig. 3 veranschaulicht dabei das Auftreten eines kombinierten parallelen und seriellen Fehlers 18, 19 in einem Gerät, in diesem Fall innerhalb eines Dreifach-Stromverteilers.

Durch die vorbeschriebenen Fehler kommt es innerhalb eines elektrischen Netzes zu im Wesentlichen sprunghaften Änderungen insbesondere des Stromes oder der Spannung. Insbesondere kommt es dadurch zu im Wesentlichen sprunghaften Änderungen, Einbrüchen oder Anstiegen des Stromes oder der Spannung. Unter einer im Wesentlichen sprunghafter Änderungen der Amplitude wenigstens eines elektrischen Parameters innerhalb des elektrischen Netzes ist dabei ein starker bzw. schneller Anstieg oder ein starker bzw. schneller Abfall der Amplitude innerhalb kurzer Zeit zu verstehen. Der Anstieg bzw. Abfall eines elektrischen Parameters pro Zeiteinheit wird allgemein durch die Slew-Rate angegeben. Bevorzugt ist im Sinne der gegenständlichen Erfindung unter einer im Wesentlichen sprunghafter Änderungen der Amplitude wenigstens eines elektrischen Parameters innerhalb des elektrischen Netzes eine Änderung einer Spannung mit einer Slew-Rate größer 1500V/µs, bzw. eine Änderung eines Stroms mit einer Slew-Rate größer 100mA/ns zu verstehen.

Ein erfindungsgemäßer Schutzschalter 11 kann jeder Art eines Detektors 1 zur Detektion aperiodischer, im Wesentlichen sprunghafter Änderungen der Amplitude wenigstens eines elektrischen Parameters innerhalb des elektrischen Netzes aufweist, wobei der Detektor 1 mit der Auslöseeinheit 10 wirkverbunden ist. Ein derartiger Detektor 1 kann sowohl integraler Bestandteil des Schutzschalters 11 sein, als auch in den Schutzschalter 11 entnehmbar eingesetzt bzw. an diesen angeflanscht sein.

Bevorzugt ist vorgesehen, dass der Schutzschalter 11 einen Detektor 1 gemäß den nachfolgend beschriebenen erfindungsgemäßen Ausgestaltungen eines Detektors 1 zur Detektion aperiodischer, im Wesentlichen sprunghafter Änderungen der Amplitude wenigstens eines elektrischen Parameters innerhalb des elektrischen Netzes aufweist bzw. mit einem solchen verbunden ist. Ein derartiger erfindungsgemäßer Detektor 1 kann jedoch auch als baulich eigenständige Einheit ausgebildet und innerhalb bzw. im Bereich eines elektrischen Netzes angeordnet sein.

Die Fig. 17 bis 20 zeigen jeweils ein funktionales Blockschaltbild einer bevorzugten Ausführungsform eines Detektor 1, insbesondere für den Schutzschalter 11, mit einem Sensor 2 zur im Wesentlichen signalgetreuen Aufnahme eines zeitlichen Verlaufs des wenigstens einen elektrischen Parameters, wobei der Detektor 1 zur Detektion aperiodischer, im Wesentlichen sprunghafter Änderungen der Amplitude wenigstens eines elektrischen Parameters, insbesondere des Stroms und/oder der Spannung, innerhalb eines elektrischen Netzes, vorzugsweise gemäß einem nachstehend beschriebenen Verfahren, ausgebildet ist.

Ein derartiger Detektor 1 weist die vorstehend bei der Beschreibung des erfindungsgemäßen Schutzschalters 11 dargelegten Vorteile und Wirkungen auf.

Erfindungsgemäße Detektoren 1 weisen dabei einen Sensor 2 zur im Wesentlichen signalgetreuen Aufnahme eines zeitlichen Verlaufs des wenigstens einen elektrischen Parameters auf. Ein solcher Sensor 2 ist bevorzugt etwa als bzw. umfassend einen Summenstromwandler, ein Stromwandler, eine Förstersonde, einen Hallgenerator, einen Shunt-Widerstand, ein Voltmeter oder Ähnliches ausgebildet, wobei insbesondere auch die Kombination zweier oder mehrerer Sensoren 2 vorgesehen sein kann. Bevorzugt ist dabei vorgesehen, dass jedem Leiter ein separater Sensor 2 zugeordnet ist, welcher die Änderungen des elektrischen Parameters aufnimmt bzw. detektiert.

Gemäß den besonders bevorzugten Ausführungsformen erfindungsgemäßer Detektoren 1, wie diese in den Fig. 17 bis 20 dargestellt sind, ist vorgesehen, dass ein Ausgang des wenigstens einen Sensors 2 an einem Eingang einer ersten Einheit 3 zur Bildung einer Signumfunktion anliegt, dass ein Ausgang der ersten Einheit 3 an einem Eingang eines Flankendetektors 4 anliegt, dass ein Ausgang des Flankendetektors 4 an einem Eingang einer zweiten Einheit 5 zur Ermittlung eines Tastverhältnisses einer Rechteckfunktion anliegt, und dass ein Ausgang der zweiten Einheit 5 an einem Eingang einer Ausgabeeinheit 6 anliegt.

Die erste Einheit 3 zur Bildung einer Signumfunktion ist etwa bevorzugt als übersteuernder Operationsverstärker ausgebildet. Flankendetektoren 4 sind beispielsweise aus der Funktechnik, etwa zur Decodierung eines Manchestercodes bekannt, und können in jeder Ausbildung für die Implementierung eines erfindungsgemäßen Detektors 1 vorgesehen sein.

Die zweite Einheit 5 zur Ermittlung eines Tastverhältnisses einer Rechteckfunktion ist vorzugsweise als Filteranordnung 7, insbesondere als Bandfilter und/oder als Kammfilter, und/oder als Transformationseinheit 8 ausgebildet. Die Verwendung bzw. Arbeitsweise der derart ausgebildeten zweiten Einheiten 5 und deren individuelle Vorteile sind bei der Beschreibung des erfindungsgemäßen Verfahrens im Detail beschrieben. Die Ausgabeeinheit 6 ist bevorzugt zur Ansteuerung einer Auslöseeinheit 10 eines Schaltgeräts, insbesondere eines Schutzschalters 11, ausgebildet, und weist daher die entsprechenden elektrischen und/oder mechanischen Ausgänge auf, um eine Auslöseeinheit 10 eines Schaltgeräts anzusteuern. Viele Schaltgeräte weisen etwa Öffnung in deren Gehäuse auf, durch welche mittels Stiften auf die Auslöseeinheit 10 eines Schaltgeräts eingewirkt werden kann. Die Ausgabeeinheit 6 kann daher einen derartigen Stift aufweisen. Die Ausgabeeinheit 6 kann aber auch beispielsweise zum Aufladen der Energiespeicherschaltung eines herkömmlichen Fehlerstromschutzschalters ausgebildet sein. Zusätzlich kann - wie in den Fig. 17 bis 20 dargestellt - vorgesehen sein, dass ein erfindungsgemäßer Detektor 1 eine Datenaufbereitungseinheit 9 aufweist, mit welcher das vom Sensor 2 generierte erste Parametersignal 15 für die nachfolgende Verarbeitung aufbereitet wird. Dabei ist vorzugsweise eine Verstärkung des ersten Parametersignals 15 oder eine Wandlung von einem Strom- in ein Spannungssignal vorgesehen.

Es kann vorgesehen sein, dass einzelne oder sämtliche Komponenten eines erfindungsgemäßen Detektors 1 in diskreter Hardware gebaut bzw. implementiert sind. Es kann auch vorgesehen sein, dass einzelne oder sämtliche Komponenten eines erfindungsgemäßen Detektors 1 hard- und/oder softwaremäßig in einem integrierten Schaltkreis implementiert sind, etwa in einem Digitalen Signalprozessor (DSP), einem Mikrocontroller (µC), Mikroprozessor (µP), Programmable Logic Device (PLD) und/oder einem Field Programmable Gate Array (FPGA).

Die Erfindung betrifft weiters ein Verfahren zur Detektion aperiodischer, im Wesentlichen sprunghafter Änderungen der Amplitude wenigstens eines elektrischen Parameters, insbesondere des Stroms und/oder der Spannung, innerhalb eines elektrischen Netzes, wobei ein zeitlicher Verlauf des wenigstens einen elektrischen Parameters im Wesentlichen signalgetreu aufgenommen und derart ein erstes Parametersignal 15 gebildet wird, wobei
- in einem ersten Schritt jedem positiven Anteil des ersten Parametersignals 15 ein vorgebbarer konstanter positiver erster Wert und/oder jedem negativen Anteil des ersten Parametersignals 15 ein vorgebbarer konstanter negativer zweiter Wert jeweils für deren Zeitdauer zugewiesen und derart ein erstes Rechtecksignal 16 gebildet wird, wobei bevorzugt vorgesehen ist, dass der erste Wert und der zweite Wert identische Beträge aufweisen,
- dass in einem nachfolgenden zweiten Schritt steigende oder fallende Flanken des ersten Rechtecksignals 16 detektiert werden, den Bereichen zwischen zwei aufeinander folgenden steigenden bzw. fallenden Flanken ein vorgebbarer konstanter dritter Wert ungleich Null, und den dazwischenliegenden Bereichen der Wert Null zugewiesen wird und derart ein zweites Rechtecksignal 17 gebildet wird,
- dass in einem nachfolgenden dritten Schritt ein erstes Tastverhältnis des zweiten Rechtecksignals 17 ermittelt wird,
- dass in einem nachfolgenden vierten Schritt das erste Tastverhältnis mit dem Tastverhältnis 1:1 verglichen wird, und dass bei einer Abweichung des ersten Tastverhältnisses vom Tastverhältnis 1:1 die Detektion einer aperiodischen, im Wesentlichen sprunghaften Änderungen der Amplitude des wenigstens einen elektrischen Parameters ausgegeben wird.

Ein derartiges Verfahren weist die vorstehend bei der Beschreibung des erfindungsgemäßen Schutzschalters dargelegten Vorteile und Wirkungen auf.

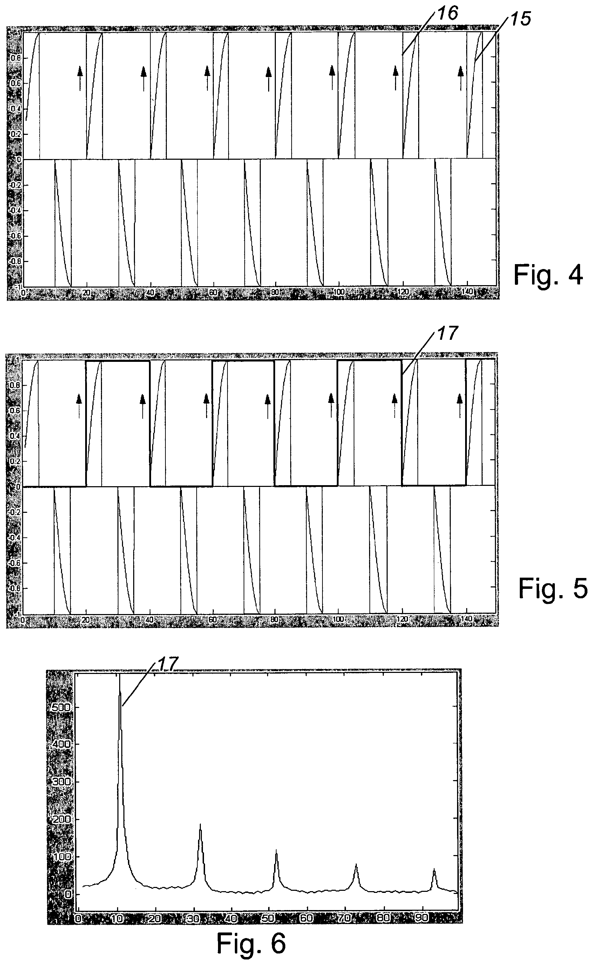

In den Fig. 3 bis 6 wird die Anwendung des erfindungsgemäßen Verfahrens auf ein erstes Parametersignal 15 veranschaulicht, welches zufolge einer periodischen im Wesentlichen sprunghafter Änderungen der Amplitude wenigstens eines elektrischen Parameters entstanden ist, wie diese etwa durch eine Phasenanschnittsteuerung erzeugt wird. Fig. 3 zeigt dabei das aufgenommene erste Parametersignal 15. Fig. 4 zeigt das sowohl das erste Parametersignal 15, als auch das nach dem ersten Schritt des Verfahrens gebildete erste Rechtecksignal 16. Im ersten Schritt wird auf das erste Parametersignal 15 die sog. Signum- bzw. Vorzeichenfunktion angewandt. Der erste Verfahrensschritt kann dabei auf die positiven, die negativen oder beide Anteile des ersten Parametersignals 15 angewendet werden.

Im zweiten Verfahrensschritt werden wie in Fig. 5 dargestellt, die Flanken des ersten Rechtecksignals 16 detektiert, und aus den steigenden Flanken ein zweites Rechecksignal 17 mit vorgebbarer Amplitude gebildet. An den steigenden Flanken des ersten Rechtecksignals 16 folgt beim zweiten Rechtecksignal 17 abwechselnd eine steigende und eine fallende Flanke. Der zweite Verfahrensschritt wird dabei für die positiven oder die negativen Anteile des ersten Parametersignals 16 durchgeführt.

Anschließend wird im dritten Verfahrensschritt das Tastverhältnis des zweiten Rechtecksignals 17 ermittelt. Das Tastverhältnis wird auch als Tastgrad bezeichnet, und in unterschiedlicher Art und Weise dargestellt bzw. ausgedrückt. Das hier angegebene Tastverhältnis 1:1 wird in der Fachliteratur zuweilen auch mit 0,5 oder mit 50% ausgedrückt, und bezeichnet ein sog. symmetrisches Rechtecksignal, wie dies etwa in Fig. 5 dargestellt ist, bei welchem die Ausschaltdauer gleich der Einschaltdauer ist.

Zur Ermittlung des Tastverhältnises sind bei dem erfindungsgemäßen Verfahren drei unterschiedliche Verfahren vorgeschlagen, welche je nach der Art der vorgesehenen Implementierung des Verfahrens Vorteile mit sich bringen.

Gemäß einer ersten und einer zweiten bevorzugten Ausbildung des dritten Verfahrensschritts ist vorgesehen, dass zur Ermittlung des Tastverhältnises des zweiten Rechtecksignals 17 dieses auf einen vorgebbaren Anteil an geradzahligen Oberschwingungen einer Grundschwingung geprüft wird. Sofern es sich bei dem zweiten Rechtecksignal 17 um ein symmetrisches Rechtecksignal handelt, weist dieses ausschließlich Oberschwingungen auf, mit Frequenzen, welche ungeradzahlige Vielfache einer Grundschwingung darstellen. Ein derartiges zweites Rechtecksignal 17 ist daher die Folge einer periodischen, im Wesentlichen sprunghafter Änderungen der Amplitude, welche Ihre Ursache in einer bewussten und nicht fehlerhaften Veränderung elektrischer Parameter hat. Fig. 6 zeigt ein Beispiel für eine solches zweites Rechtecksignal 17 im Frequenzbereich. Eine aperiodische, im Wesentlichen sprunghafter Änderungen der Amplitude hingegen entsteht als Folge eines unregelmäßig auftretenden Fehlers, und äußerst sich durch einen Anteil an Oberschwingungen, deren Frequenz geradzahlige Vielfache einer Grundschwingung sind.

Gemäß der ersten bevorzugten Ausbildung des dritten Verfahrensschritts ist vorgesehen, dass das zweite Rechtecksignal 17 vom Zeitbereich in einen Bildbereich, vorzugsweise in den Frequenzbereich, transformiert wird, und nachfolgend die geradzahligen Oberschwingungen einer Grundschwingung ermittelt werden. Dadurch kann, insbesondere bei Implementierung einer FFT, schnell und sehr exakt eine Grundschwingung und deren Oberschwingungen ermittelt werden, und auch der Anteil an geradzahligen Oberschwingungen ermittelt werden. Dies ist besonders vorteilhaft bei der Verwendung eines Prozessors im Detektor 1. Eine derartige Ausgestaltung ist etwa bei einem Detektor 1 nach Fig. 19 oder 20 vorgesehen.

Gemäß der ersten bevorzugten Ausbildung des dritten Verfahrensschritts ist vorgesehen, dass das zweite Rechtecksignal 17 mittels einer Filteranordnung 7, insbesondere mittels eines Bandfilters oder Kammfilters, gefiltert wird, und nachfolgend die geradzahligen Oberschwingungen einer Grundschwingung ermittelt werden. Dadurch ist ein diskreter Aufbau eines derartigen Detektors 1 möglich, eignet sich jedoch auch für die Implementierung in einem IC. Ein Detektor 1 mit einer derartigen Ausbildung ist etwa in Fig. 17 dargestellt. Da eine Filteranordnung 7 zur Ermittlung von Oberschwingungen auf eine Grundschwingung abgestimmt sein muss, ist in Weiterbildung dieser Ausführungsform vorgesehen, dass Filterkonstante der Filteranordnung 7 an eine ermittelte Frequenz einer Grundschwingung angepasst werden. Hiefür kann eine dritte Einheit 12 zur Anpassung der Filterkoeffizienten vorgesehen sein, wie etwa bei der Ausbildung nach Fig. 18. Die Frequenz der Grundschwingung kann etwa im Bereich des Flankendetektors 4 ermittelt werden, etwa durch Zählen der Flanken des ersten Rechtecksignals 16.

Weiters ist eine dritte bevorzugte Ausbildung des dritten Verfahrensschritts vorgesehen, bei welcher dem zweiten Rechtecksignal 17 ein Signal mit dem halben Betrag des dritten Werts addiert bzw. subtrahiert wird und derart ein drittes Rechtecksignal gebildet wird, wobei weiters nachfolgend das dritte Rechtecksignal auf Offsetfreiheit geprüft wird. Hiebei wir versucht das zweite Rechtecksignal 17 hinsichtlich dessen positiven und negativen Signalanteile zu symmetrieren, was nur bei einem zweiten Rechtecksignal mit symmetrischem Tastverhältnis bzw. Tastgrad gelingen kann. Ein zweites Rechtecksignal 17 mit einem hievon abweichenden Tastverhältnis weist zwangsläufig einen Offset auf, daher einen Gleichspannungsanteil. Wird ein solcher Offset bzw. Gleichspannungsanteil detektiert, lässt dies zwingend auf die Detektion einer aperiodischen, im Wesentlichen sprunghaften Änderungen der Amplitude wenigstens eines elektrischen Parameters schließen.

In einem vierten Verfahrensschritt, wird neben dem bereits beschriebenen Vergleich des ersten Tastverhältnises mit dem Tastverhältnis 1:1, bei einer Abweichung des ersten Tastverhältnisses vom Tastverhältnis 1:1 die Detektion einer aperiodischen, im Wesentlichen sprunghaften Änderungen der Amplitude des wenigstens einen elektrischen Parameters ausgegeben. Das heißt, es erfolgt entweder die Ausgabe einer Meldung an ein Kontrollsystem oder einen Benutzer oder es wird eine Auslöseeinheit 10 eines Schaltgeräts angesteuert.

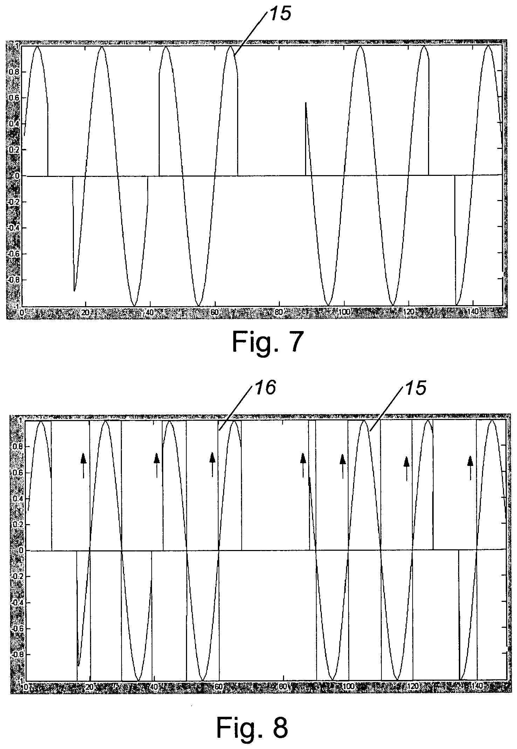

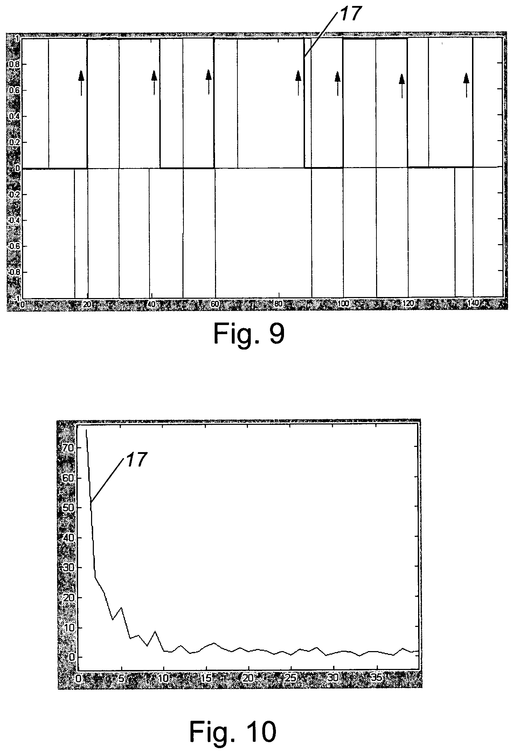

In den Fig. 7 bis 10 sind die einzelnen vorbeschriebenen Verfahrensschritte bei einem ersten Parametersignal 15 veranschaulicht, welche eine aperiodische im Wesentlichen sprunghafte Änderung eines elektrischen Parameters zufolge eines seriellen Fehlers 18 aufweist. Gut zu erkennen sind dabei in Fig. 10 die unterschiedlichen schwach ausgeprägten Oberschwingungen, welche jeweils etwa gleiche Beträge aufweisen. Daher scheinen neben den ungeradzahligen Oberschwingungen auch geradzahlige Oberschwingungen auf.

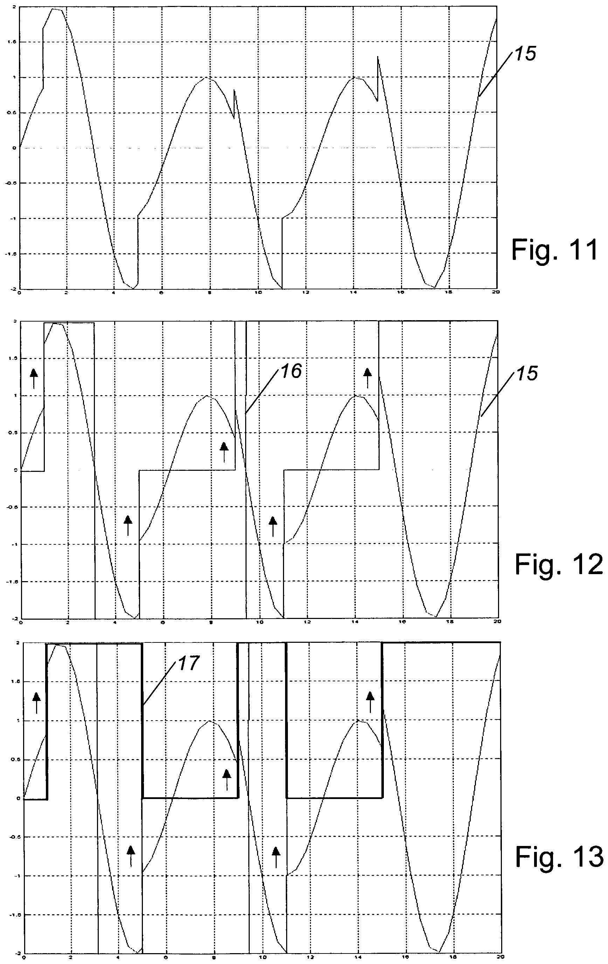

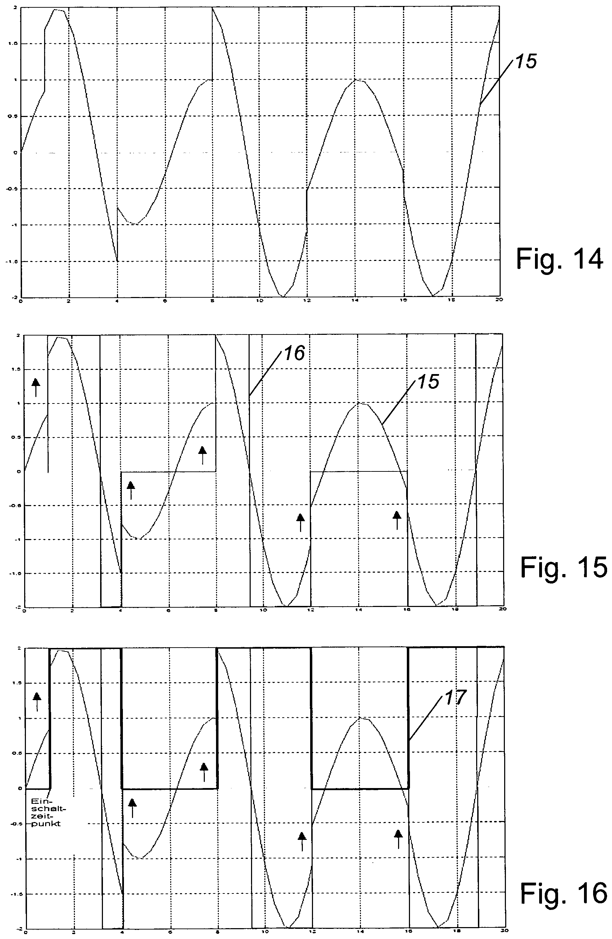

Bei sog. parallelen Fehlern 19 besteht der Sonderfall, dass ein zusätzliches Signal, etwa ein Strom, dem ungestörten Parametersignal überlagert ist. Die Fig. 11 bis 13 veranschaulichen das erste Parametersignal, sowie das erste und zweite Rechtecksignal eines aperiodisch gestörten ersten Parametersignals 15, wobei deutlich die im Wesentlichen sprunghaften Änderungen des ersten Parametersignals 15 erkennbar sind. Die Fig. 14 bis 16 veranschaulichen das erste Parametersignal 15, sowie das erste und zweite Rechtecksignal 16, 17 eines periodisch gestörten ersten Parametersignals 15, wobei deutlich die im Wesentlichen sprunghaften Änderungen des ersten Parametersignals 15 erkennbar sind.

Im ersten Verfahrensschritt ist dabei zusätzlich zur Anwendung der reinen Signumfunktion weiters die Detektion der Flanke vorgesehen. Die Signumfunktion wird daher nicht auf alle Anteile des ersten Parametersignals 15 angewandt, sondern nur auf die Bereiche, welche eine erhöhte Amplitude aufweisen. Es ist daher vorgesehen, dass im ersten Schritt der erste Wert positiven Anteilen des ersten Parametersignals 15 und der zweite Wert negativen Anteilen des ersten Parametersignals 15 zwischen zwei zeitlich aufeinander folgenden, im Wesentlichen sprunghaften Änderungen, welche eine - gegenüber dem ersten Parametersignal 15 vor der im Wesentlichen sprunghaften Änderung - größere Amplitude aufweisen, zugewiesen wird. Das derart gebildete erste Rechtecksignal 16 wird dann wie vorstehend beschrieben weiterverarbeitet und bewertet.

Bevorzugt ist dabei vorgesehen, dass beide vorbeschriebenen Ausbildungen des ersten Verfahrensschrittes parallel ausgeführt werden.

Zum Erkennen von Einschaltvorgängen ist bevorzugt vorgesehen, dass das, insbesondere ein zeitlich unperiodisches, erste Parametersignal 15 für eine vorgebbare Zeitdauer zwischengespeichert wird.

Es kann weiters vorgesehen sein, unterschiedliche Ausbildungen des beschriebenen Verfahrens bzw. unterschiedliche Ausgestaltungen des beschriebenen Detektors 1 in einer Anordnung parallel zu betreiben, etwa um komplexere erste Parametersignale 15 zu bewerten, welche sich etwa aus einer Mehrzahl an Einzelsignalen mit unterschiedlichen Amplituden zusammensetzen. Fig. 20 zeigt ein Blockschaltbild einer derartigen Anordnung, wobei eine vierte Einheit zur Pegelseparation und eine fünfte Einheit zur Zuordnung der Flanken zu unterschiedlichen Amplituden vorgesehen ist. Die dargestellte Ausführungsform weist unterschiedlich ausgebildete zweite Einheiten zur Ermittlung eines Tastverhältnisses auf, es kann jedoch auch vorgesehen sein, dass diese ident aufgebaut sind.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Detektor (1) mit einem Sensor (2) zur im Wesentlichen signalgetreuen Aufnahme eines zeitlichen Verlaufs des wenigstens einen elektrischen Parameters, wobei der Detektor (1) zur Detektion aperiodischer, im Wesentlichen sprunghafter Änderungen der Amplitude wenigstens eines elektrischen Parameters, insbesondere des Stroms und/oder der Spannung, innerhalb eines elektrischen Netzes, gemäß einem Verfahren nach einem der Ansprüche 6 bis 15, ausgebildet ist, **dadurch gekennzeichnet, dass** ein Ausgang des Sensors (2) an einem Eingang einer ersten Einheit (3) zur Bildung einer Signumfunktion des elektrischen Parameters anliegt, dass ein Ausgang der ersten Einheit (3) an einem Eingang eines Flankendetektors (4) anliegt, dass ein Ausgang des Flankendetektors (4) an einem Eingang einer zweiten Einheit (5) zur Ermittlung eines Tastverhältnisses einer Rechteckfunktion anliegt, und dass ein Ausgang der zweiten Einheit (5) an einem Eingang einer Ausgabeeinheit (6) anliegt.

2. Detektor (1) nach Anspruch 1, **dadurch gekennzeichnet, dass** die zweite Einheit (5) als Filteranordnung (7), insbesondere als Bandfilter und/oder als Kammfilter, ausgebildet ist.

3. Detektor (1) nach Anspruch 1 oder 2, **dadurch gekennzeichnet, dass** die zweite Einheit (5) als Transformationseinheit (8) ausgebildet ist.

4. Detektor (1) nach einem der Ansprüche 1 bis 3, **dadurch gekennzeichnet, dass** die Ausgabeeinheit (6) zur Ansteuerung einer Auslöseeinheit (10) eines Schaltgeräts, insbesondere eines Schutzschalters (11), ausgebildet ist.

5. Schutzschalter (11), welcher Trennkontakte zum vorgebbaren Abschalten eines elektrischen Netzes aufweist, wobei die Trennkontakte von wenigstens einer Auslöseeinheit (10) ansteuerbar sind, **dadurch gekennzeichnet, dass** der Schutzschalter einen Detektor (1) gemäß einem der Ansprüche 1 bis 4 aufweist, und dass die Auslöseeinheit (10) mit dem Detektor (1) wirkverbunden ist.

6. Verfahren zur Detektion aperiodischer, im Wesentlichen sprunghafter Änderungen der Amplitude wenigstens eines elektrischen Parameters, insbesondere des Stroms und/oder der Spannung, innerhalb eines elektrischen Netzes, wobei ein zeitlicher Verlauf des wenigstens einen elektrischen Parameters im Wesentlichen signalgetreu aufgenommen und derart ein erstes Parametersignal (15) gebildet wird, **dadurch gekennzeichnet, dass**
- in einem ersten Schritt jedem positiven Anteil des ersten Parametersignals (15) ein vorgebbarer konstanter positiver erster Wert und/oder jedem negativen Anteil des ersten Parametersignals (15) ein vorgebbarer konstanter negativer zweiter Wert jeweils für deren Zeitdauer zugewiesen und derart ein erstes Rechtecksignal (16) gebildet wird,
- dass in einem nachfolgenden zweiten Schritt steigende oder fallende Flanken des ersten Rechtecksignals (16) detektiert werden, den Bereichen zwischen zwei aufeinander folgenden steigenden bzw. fallenden Flanken ein vorgebbarer konstanter dritter Wert ungleich Null, und den dazwischenliegenden Bereichen der Wert Null zugewiesen wird und derart ein zweites Rechtecksignal (17) gebildet wird,
- dass in einem nachfolgenden dritten Schritt ein erstes Tastverhältnis des zweiten Rechtecksignals (17) ermittelt wird,
- dass in einem nachfolgenden vierten Schritt das erste Tastverhältnis mit dem Tastverhältnis 1:1 verglichen wird, und dass bei einer Abweichung des ersten Tastverhältnisses vom Tastverhältnis 1:1 die Detektion einer aperiodischen, im Wesentlichen sprunghaften Änderungen der Amplitude des wenigstens einen elektrischen Parameters ausgegeben wird.

7. Verfahren nach Anspruch 6, **dadurch gekennzeichnet, dass** im ersten Schritt der erste Wert positiven Anteilen des ersten Parametersignals (15) und der zweite Wert negativen Anteilen des ersten Parametersignals (15) zwischen zwei zeitlich aufeinander folgenden, im Wesentlichen sprunghaften Änderungen, welche eine - gegenüber dem ersten Parametersignal (15) vor der im Wesentlichen sprunghaften Änderung - größere Amplitude aufweisen, zugewiesen wird,

8. Verfahren nach Anspruch 6 oder 7, **dadurch gekennzeichnet, dass** der erste Wert und der zweite Wert identische Beträge aufweisen.

9. Verfahren nach einem der Ansprüche 6 bis 8, **dadurch gekennzeichnet, dass** zur Ermittlung des Tastverhältnises des zweiten Rechtecksignals (17) dieses auf einen vorgebbaren Anteil an geradzahligen Oberschwingungen einer Grundschwingung geprüft wird.

10. Verfahren nach einem der Ansprüche 6 bis 9, **dadurch gekennzeichnet, dass** das zweite Rechtecksignal (17) vom Zeitbereich in einen Bildbereich transformiert wird, und nachfolgend die geradzahligen Oberschwingungen einer Grundschwingung ermittelt werden.

11. Verfahren nach Anspruch 10, **dadurch gekennzeichnet, dass** das zweite Rechtecksignal (17) vom Zeitbereich in den Frequenzbereich transformiert wird, und nachfolgend die geradzahligen Oberschwingungen einer Grundschwingung ermittelt werden.

12. Verfahren nach einem der Ansprüche 6 bis 11, **dadurch gekennzeichnet, dass** das zweite Rechtecksignal (17) mittels einer Filteranordnung (7), insbesondere mittels eines Bandfilters oder Kammfilters, gefiltert wird, und nachfolgend die geradzahligen Oberschwingungen einer Grundschwingung ermittelt werden.

13. Verfahren nach Anspruch 12, **dadurch gekennzeichnet, dass** Filterkonstante der Filteranordnung (7) an eine ermittelte Frequenz einer Grundschwingung angepasst werden.

14. Verfahren nach einem der Ansprüche 6 bis 13, **dadurch gekennzeichnet, dass** dem zweiten Rechtecksignal (17) ein Signal mit dem halben Betrag des dritten Werts addiert bzw. subtrahiert wird und derart ein drittes Rechtecksignal gebildet wird, und dass nachfolgend das dritte Signal auf Offsetfreiheit geprüft wird.

15. Verfahren nach einem der Ansprüche 6 bis 14, **dadurch gekennzeichnet, dass** das, insbesondere ein zeitlich unperiodisches, erste Parametersignal für eine vorgebbare Zeitdauer zwischengespeichert wird.

## Claims

1. Detector (1) having a sensor (2) for the substantially high fidelity recording of a chronological progression of the at least one electrical parameter, wherein the detector (1) is configured for the detection of aperiodic, substantially sudden changes in the amplitude of at least one electrical parameter, in particular of the current and/or of the voltage, within an electrical network, according to a method according to one of claims 6 to 15, **characterised in that** an output of the sensor (2) is applied to an input of a first unit (3) for the formation of a signum function of the electrical parameter, that an output of the first unit (3) is applied to an input of an edge detector (4), that an output of the edge detector (4) is applied to an input of a second unit (5) for the determination of a duty factor of a rectangular function, and that an output of the second unit (5) is applied to an input of an output unit (6).

2. Detector (1) according to claim 1, **characterised in that** the second unit (5) is configured as filter arrangement (7), in particular as band filter and/or as comb filter.

3. Detector (1) according to claim 1 or 2, **characterised in that** the second unit (5) is formed as transformation unit (8).

4. Detector (1) according to any of claims 1 to 3, **characterised in that** the output unit (6) is configured for the controlling of a release device (10) of a switching device, in particular of a protective switch (11).

5. Protective switch (11), which has break contacts for the predeterminable switching-off of an electrical network, wherein the break contacts are controllable by at least one release device (10), **characterised in that** the protective switch has a detector (1) according to any of claims 1 to 4, and that the release device (10) is operatively connected with the detector (1).

6. Method for the detection of aperiodic, substantially sudden changes of the amplitude of at least one electrical parameter, in particular of the current and/or of the voltage, within an electrical network, wherein a chronological progression of the at least one electrical parameter is recorded substantially in high fidelity and in this manner a first parameter signal (15) is formed, **characterised in that**
- in a first step, to each positive portion of the first parameter signal (15) is allotted a pre-determinable constant positive first value and/or to each negative portion of the first parameter signal (15) is allotted a pre-determinable constant negative second value, in each case for the chronological duration thereof, and in such a manner a first rectangular signal (16) is formed,
- that in a following second step increasing or decreasing edges of the first rectangular signal (16) are detected, to the regions between two increasing or decreasing edges following one another is allotted a pre-determinable constant third value which is not equal to zero, and to the regions lying there between is allotted the value zero, and in such a manner a second rectangular signal (17) is formed,
- that in a following third step a first duty factor of the second rectangular signal (17) is determined,
- that in a following fourth step the first duty factor is compared with the duty factor 1:1, and that in the case of a deviation of the first duty factor from the duty factor 1:1 the detection of an aperiodic, substantially sudden changes in the amplitude of the at least one electrical parameter is outputted.

7. Method according to claim 6, **characterised in that** in the first step the first value is allotted to positive portions of the first parameter signal (15) and the second value is allotted to negative portions of the first parameter signal (15) between two substantially sudden changes following chronologically one after another, which changes have a larger amplitude in comparison to the first parameter signal (15) prior to the substantially sudden change.

8. Method according to claim 6 or 7, **characterised in that** the first value and the second value are identical.

9. Method according to any of claims 6 to 8, **characterised in that** for the determination of the duty factor of the second rectangular signal (17) this is tested for a pre-determinable proportion of even-numbered harmonics of a basic oscillation.

10. Method according to any of claims 6 to 9, **characterised in that** the second rectangular signal (17) is transformed from a time domain into a complex domain, and thereafter the even-numbered harmonics of a basic oscillation are determined.

11. Method according to claim 10, **characterised in that** the second rectangular signal (17) is transformed from a time domain into the frequency domain, and thereafter the even-numbered harmonics of a basic oscillation are determined.

12. Method according to any of claims 6 to 11, **characterised in that** the second rectangular signal (17) is filtered using a filter arrangement (7), in particular using a band filter or comb filter, and thereafter the even-numbered harmonics of a basic oscillation are determined.

13. Method according to claim 12, **characterised in that** filter constants of the filter arrangement (7) are adapted to a determined frequency of a basic oscillation.

14. Method according to any of claims 6 to 13, **characterised in that** a signal with half the value of the third value is added to or subtracted from the second rectangular signal (17) and in this manner a third rectangular signal is formed, and that thereafter the third signal is tested for offset flexibility.

15. Method according to any of claims 6 to 14, **characterised in that** the, in particular one chronologically aperiodic, first parameter signal is cached for a pre-determinable period of time.

## Revendications

1. Détecteur (1) avec un capteur (2) pour l'enregistrement, sensiblement fidèle aux signaux, d'une allure temporelle de l'au moins un paramètre électrique, dans lequel le détecteur (1) est conçu pour la détection de variations apériodiques, sensiblement brusques de l'amplitude d'au moins un paramètre électrique, en particulier du courant et/ou de la tension, à l'intérieur d'un réseau électrique, d'après un procédé selon l'une quelconque des revendications 6 à 15, **caractérisé en ce qu'**une sortie du capteur (2) est située au niveau d'une entrée d'une première unité (3) pour la formation d'une fonction de signe du paramètre électrique, **en ce qu'**une sortie de la première unité (3) est située au niveau d'une entrée d'un détecteur de front (4), **en ce qu'**une sortie du détecteur de front (4) est située à une entrée d'une seconde unité (5) pour la détermination d'un rapport cyclique d'une fonction carrée, et **en ce qu'**une sortie de la seconde unité (5) est située au niveau d'une entrée d'une unité de sortie (6).

2. Détecteur (1) selon la revendication 1, **caractérisé en ce que** la seconde unité (5) est conçue en tant qu'agencement de filtrage (7), en particulier en tant que filtre de bande et/ou filtre en peigne.

3. Détecteur (1) selon la revendication 1 ou 2, **caractérisé en ce que** la seconde unité (5) est conçue en tant qu'unité de transformation (8).

4. Détecteur (1) selon l'une quelconque des revendications précédentes 1 à 3, **caractérisé en ce que** l'unité de sortie (6) est conçue pour l'excitation d'une unité de déclenchement (10) d'un appareil de disjonction, en particulier d'un disjoncteur de protection (11).

5. Disjoncteur de protection (11), qui comprend des contacts de séparation pour la coupure prédéfinissable d'un réseau électrique, dans lequel les contacts de séparation peuvent être excités par au moins une unité de déclenchement (10), **caractérisé en ce que** le disjoncteur de protection comprend un détecteur (1) selon l'une quelconque des revendications 1 à 4, et **en ce que** l'unité de déclenchement (10) est reliée de manière fonctionnelle au détecteur (1).

6. Procédé de détection de variations apériodiques, sensiblement brusques de l'amplitude d'au moins un paramètre électrique, en particulier du courant et/ou de la tension, à l'intérieur d'un réseau électrique, dans lequel une allure temporelle de l'au moins un paramètre électrique est enregistrée de manière sensiblement fidèle au signal et de cette façon un premier signal de paramètre (15) est formé, **caractérisé en ce que**
- dans une première étape à chaque partie positive du premier signal de paramètre (15) est attribuée une première valeur positive constante prédéfinissable et/ou à chaque partie négative du premier signal de paramètre (15) est attribuée une deuxième valeur négative constante prédéfinissable chacune pour leur durée temporelle et de cette façon un premier signal carré (16) est formé,
- **en ce que**, dans une seconde étape suivante, des fronts montants ou descendants du premier signal carré (16) sont détectés, aux zones entre deux fronts montants ou descendants consécutifs est attribuée une troisième valeur constante prédéfinissable, différente de zéro, et aux zones situées entre ceux-ci est attribuée la valeur zéro et de cette façon un deuxième signal carré (17) est formé,
- **en ce que**, dans une troisième étape suivante, un premier rapport cyclique du deuxième signal carré (17) est déterminé,
- **en ce que**, dans une quatrième étape suivante, le premier rapport cyclique est comparé au rapport cyclique 1:1, et **en ce que**, en cas d'un écart du premier rapport cyclique avec le rapport cyclique 1:1, la détection de variations apériodiques, sensiblement brusques de l'amplitude de l'au moins un paramètre électrique, est délivrée en sortie.

7. Procédé selon la revendication 6, **caractérisé en ce que**, dans la première étape, la première valeur est attribuée à des parties positives du premier signal de paramètre (15) et la deuxième valeur à des parties négatives du premier signal de paramètre (15) entre deux variations consécutives dans le temps, sensiblement brusques, qui présentent une amplitude plus grande, par rapport au premier signal de paramètre (15) avant la variation sensiblement brusque.

8. Procédé selon la revendication 6 ou 7, **caractérisé en ce que** la première valeur et la deuxième valeur présentent des montants identiques.

9. Procédé selon l'une quelconque des revendications 6 à 8, **caractérisé en ce que**, pour la détermination du rapport cyclique du deuxième signal carré (17), celui-ci est vérifié sur une partie prédéfinissable au niveau d'oscillations harmoniques d'ordre pair d'une oscillation de base.

10. Procédé selon l'une quelconque des revendications 6 à 9, **caractérisé en ce que** le deuxième signal carré (17) est transformé du domaine temporel dans un domaine imaginaire et, ensuite, les oscillations harmoniques d'ordre pair d'une oscillation de base sont déterminées.

11. Procédé selon la revendication 10, **caractérisé en ce que** le deuxième signal carré (17) est transformé du domaine temporel dans le domaine fréquentiel et, ensuite, les oscillations harmoniques d'ordre pair d'une oscillation de base sont déterminées.

12. Procédé selon l'une quelconque des revendications 6 à 11, **caractérisé en ce que** le deuxième signal carré (17) est filtré au moyen d'un agencement de filtrage (7), en particulier au moyen d'un filtre de bande ou d'un filtre en peigne et, ensuite, les oscillations harmoniques d'ordre pair d'une oscillation de base sont déterminées.

13. Procédé selon la revendication 12, **caractérisé en ce que** des constantes de filtre de l'agencement de filtrage (7) sont adaptées à une fréquence déterminée d'une oscillation de base.

14. Procédé selon l'une quelconque des revendications 6 à 13, **caractérisé en ce qu'**au deuxième signal carré (17) est additionné ou soustrait un signal avec le demi-montant de la troisième valeur et de cette façon un troisième signal carré est formé, et que, ensuite, le troisième signal est vérifié quant à une absence de décalage.

15. Procédé selon l'une quelconque des revendications 6 à 14, **caractérisé en ce qu'**un premier signal de paramètre, en particulier temporellement apériodique, est mémorisé temporairement pour une durée temporelle prédéfinissable.
